Europäisches Patentamt

European Patent Office

Office européen des brevets

(11) Publication number: **0 080 829 B1**

(12) **EUROPEAN PATENT SPECIFICATION**

(45) Date of publication of patent specification: **30.01.91**

(51) Int. Cl.⁵: **G 02 B 6/28, H 04 B 10/20**

(21) Application number: **82306134.6**

(22) Date of filing: **18.11.82**

(54) **Optical communication system.**

(30) Priority: **26.11.81 JP 189544/81**
**18.01.82 JP 5671/82**
**12.07.82 JP 119931/82**
**20.07.82 JP 125002/82**
**28.07.82 JP 130224/82**

(43) Date of publication of application:
**08.06.83 Bulletin 83/23**

(45) Publication of the grant of the patent:
**30.01.91 Bulletin 91/05**

(84) Designated Contracting States:
**DE FR GB NL**

(56) References cited:
**EP-A-0 037 680      US-A-3 883 222**
**FR-A-2 298 237      US-A-4 027 153**
**FR-A-2 333 258      US-A-4 234 969**
**US-A-1 092 059      US-A-4 261 641**
**US-A-3 680 080**

**LASER FOCUS, vol. 15, no. 10, Oct. 1970, pages 60-66; GB L.J. COYNE:"Coupling: Do it with a star."**

(73) Proprietor: **KABUSHIKI KAISHA TOSHIBA
72, Horikawa-cho Saiwai-ku
Kawasaki-shi Kanagawa-ken 210 (JP)**

(72) Inventor: **Ozeki, Takeshi
5-9-10-104, Kamiyoga Setagaya-ku
Tokyo (JP)**
Inventor: **Tamura, Toshifumi
2-15-3, Yamato-cho Nakano-ku
Tokyo (JP)**
Inventor: **Ibe, Hiroyuki
1590-8, Izumi-cho Totsuka-ku
Yokohama-shi (JP)**
Inventor: **Shibagaki, Taro
1-29-5, Minamimagome Oota-ku
Tokyo (JP)**

(74) Representative: **Freed, Arthur Woolf et al
MARKS & CLERK 57-60 Lincoln's Inn Fields
London WC2A 3LS (GB)**

# EP 0 080 829 B1

**Description**

This invention relates to generally to optical communication systems for interconnecting a plurality of remotely located stations.

There are generally two types of communication systems using optical fibers. One is an active type system in which an optical signal received at a repeater at each station is changed into an electrical signal, and then is changed back into an optical signal. Another is a passive type system in which an optical signal received at each station is transmitted as it is, after being added with other optical signals, or being branched.

It is impossible to transmit information in the former system even if one of the repeaters fails or goes off. However, it is possible to communicate between two stations in the latter system if only the two stations are operating. Therefore, the latter system is employed in many cases.

US 4234969 discloses an optical coupler in accordance with the pre-characterising part of Claim 1.

It is one object of this invention to provide an optical communication system in which many stations may be interconnected without increased light loss and construction cost.

It is another object of this invention to provide an optical communication system having a simple structure and no danger of oscillation.

According to the invention, there is provided a passive optical coupler comprising: at least three pairs of ports, each of said pairs including an input port and a corresponding output port; said coupler further comprising an optical system, characterized in that the optical system comprises diverging and converging lens means for diverging an optical signal input beam from any said input port and converging an optical signal output beam onto any said output port and directing means for directing a said diverged optical signal input beam onto all said output ports except said output port corresponding to said input port receiving said optical signal input beam.

Preferred features of the invention are recited in Claims 2 to 13.

Other objects and features of the invention will become apparent to those skilled in the art as disclosure is made in the following description of preferred embodiments of the invention, as illustrated in the accompanying sheets of drawings, in which:

Fig. 1 shows a schematic diagram of a portion of a communication system in accordance with the present invention;

Fig. 2 shows a model of a general optical coupler;

Fig. 3 shows a graph of the relationship between the number of station (S) and the maximum optical loss in accordance with the present invention;

Fig. 4 shows a graph of the relationship between the number of station (S) and the required dynamic range in accordance with the present invention;

Fig. 5 shows a perspective view of one embodiment of a passive optical coupler in accordance with the present invention;

Fig. 6 shows a side view of the embodiment in Fig. 5;

Fig. 7 shows a model of a passive optical coupler having three pairs of ports in accordance with the present invention;

Figs. 8 and 9 show perspective views of two other embodiments of passive optical couplers in accordance with the present invention;

Figs. 10 and 11 show two schematic views to explain the structure of the embodiment in Fig. 9;

Fig. 12 shows a perspective view of another embodiment of an optical coupler of the reflection type in accordance with the present invention;

Fig. 13 shows a characteristic view of passive optical coupler having four pairs of ports in accordance with the present invention;

Figs. 14 and 15 show two schematic views to explain the structure of the embodiment in Fig. 13;

Figs. 16, 17, 18 and 19 show schematic views to explain the reflecting condition of optical signals inputted to input ports on the embodiment shown in Fig. 13;

Fig. 20 shows a perspective view of yet another embodiment of an optical coupler of the reflection type in accordance with the present invention;

Figs. 21 and 22 show schematic views to explain the operation of reflector shown in Fig. 20;

Fig. 23 shows a perspective view of still another embodiment of an optical coupler of the reflection type in accordance with the present invention;

Figs. 24, 25 and 26 show schematic views to explain the structure of the embodiment shown in Fig. 23;

Figs. 27, 28, 29 and 30 show schematic views to explain the reflecting condition of optical signals inputted to input ports on the embodiment shown in Fig. 23;

Fig. 31 shows a perspective view of another embodiment of a reflection type optical coupler in accordance with the present invention;

Figs. 32, 33, 34 and 36 show schematic views to explain the structure of the embodiment shown in Fig. 31; and

Figs. 37, 38, 39, 40, 41 and 42 show schematic views to explain the reflecting condition of optical signals inputted to input ports on the embodiment shown in Fig. 31.

Referring now to the drawing, several embodiments by the present invention will be explained.

2

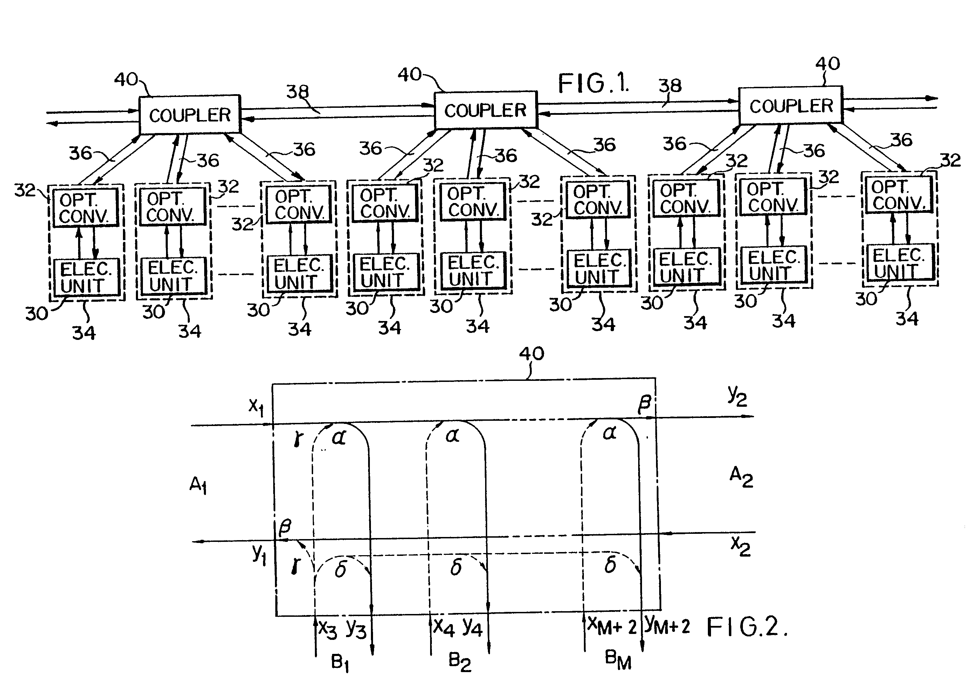

Fig. 1 shows a portion of one embodiment of an optical communication system. A plurality of electrical units 30 for generating and processing electrical signals are associated with a plurality of optical converters 32 for changing electrical signals from electrical units 30 into optical signals and vice versa. Each electrical unit 30 and optical converter 32 pair constitutes a station 34. Station 34 consists of electrical unit 30 and optical converter 32.

Each branch optical transmission line 36 includes two optical fibres. One transmits optical signals from an optical converter 32 to a passive optical coupler 40. Another optical fiber transmits optical signals in the other direction. Main optical signal transmission lines 39 transmit optical signals between passive optical couplers 40. Each main optical signal transmission line 38 also includes two optical fibers which transmit optical signals in opposite directions.

Suppose the optical communication system has N passive optical couplers 40, each of which has M + 2 pairs of ports. A pair of ports consists of one input port and one output port. Each of M and N is an integer not smaller than 1. Two pairs of ports of each optical coupler are used to transmit optical signals to adjacent couplers and to receive optical signals from adjacent couplers by way of main optical signal transmission lines 38. The other M pairs of ports of each optical coupler are used to transmit optical signals to M stations and to receive optical signals from the M stations by way of M optical transmission lines 36. Therefore, the communication system has M × N (=S) stations.

An oscillation phenomenon exists in prior art systems resulting from optical signals being reflected back into the passive optical coupler of their origin. For instance, optical signals coming into a first passive optical coupler 40 are transmitted to a second adjacent passive optical coupler 40 through one of the two optical fibers constituting main optical transmission line 38. A part of the optical signals coming into the second optical coupler 40 is transmitted back to the first optical coupler 40 by way of the other optical fiber of main optical transmission line 38. A part of the optical signals coming back into the first optical coupler 40 is transmitted to the second, adjacent optical coupler 40 by way of the previous optical fiber of transmission line 38. The result is oscillation.

However, each of the passive optical couplers 40 in accordance with this invention has the characteristic that a signal inputted to an input port of one pair of ports is outputted to output ports of all pairs except the output port of one pair which received the input signal. Therefore, oscillations are suppressed.

A passive optical coupler having such a characteristic will now be theoretically explained by using Fig. 2. In Fig. 2, two pairs of ports of passive optical coupler 40 are bus ports $A_1$ and $A_2$ which may typically be connected to two main optical signal transmission lines. M pairs of ports of passive optical coupler 40 are branch ports $B_1$, $B_2$, ..., $B_M$ which may typically be connected to M branch optical signal transmission lines.

$x_1$ and $x_2$ represent the input optical power inputted to each input port of the two bus ports. $x_3$, $x_4$, ..., $x_{M+2}$ represent the input optical power inputted to each input port of the M branch ports. $y_1$ and $y_2$ represent the output optical power outputted to each output port of the two bus ports. $y_3$, $y_4$, ..., $y_{M+2}$ represent the output optical power outputted to each output port of the M branch ports.

Optical power input/output characteristics of coupler 40 are given in the form using a scattering matrix as follows:

$$
\begin{pmatrix} y_1 \\ y_2 \\ y_3 \\ \cdot \\ \cdot \\ \cdot \\ \cdot \\ y_{M+2} \end{pmatrix} = \begin{pmatrix} 0 & \beta & \gamma & \gamma & \cdots & \gamma \\ \beta & 0 & \gamma & \gamma & \cdots & \gamma \\ \alpha & \alpha & 0 & \delta & \cdots & \delta \\ \alpha & \alpha & \delta & 0 & \cdots & \delta \\ \cdot & \cdot & \cdot & \cdot & & \cdot \\ \cdot & \cdot & \cdot & \cdot & & \cdot \\ \cdot & \cdot & \cdot & \cdot & & \cdot \\ \alpha & \alpha & \delta & \delta & \cdots & 0 \end{pmatrix} \cdot \begin{pmatrix} x_1 \\ x_2 \\ x_3 \\ \cdot \\ \cdot \\ \cdot \\ \cdot \\ x_{M+2} \end{pmatrix}
$$

Where $\beta$ denotes the transfer coefficient between bus ports $A_1$ and $A_2$, namely $(x_1 \rightarrow y_2)$ and $(x_2 \rightarrow y_1)$. $\alpha$ denotes the transfer coefficient from bus ports $A_1$, $A_2$, to branch ports $B_1$, $B_2$, ..., $B_M$, namely $(x_1 \rightarrow y_3, y_4, ..., y_{M+2})$ and $(x_2 \rightarrow y_3, y_4, ..., y_{M+2})$. $\gamma$ denotes the transfer coefficient from branch ports $B_1$, $B_2$, ..., $B_M$ to bus ports $A_1$, $A_2$, namely $(x_3, x_4, ..., x_{M+2} \rightarrow y_1)$ and $(x_3, x_4, ..., x_{M+2} \rightarrow y_2)$. $\delta$ denotes the transfer coefficient among branch ports $B_1$, $B_2$, ..., $B_M$, namely $(x_3, x_4, ..., x_{M+2} \rightarrow y_3, y_4, ..., y_{M+2})$. The elements along the major diagonal from top left to bottom right in the scattering matrix are zeroes. This means that an optical signal inputted to an input port of one of the bus ports or branch ports does not output through the output port of the same port. Practically, couplers having the characteristic that the major diagonal elements from top left to bottom right in the scattering matrix are not zero but are a sufficiently small value to be applicable to this invention.

The relationship of the maximum optical loss to the number of ports M or the number of stations S will now be explained. The maximum loss in an optical transmission network is given by a channel connecting the end groups of the optical transmission network to each other. In the case that passive optical couplers 40 have identical specifications entirely, the maximum optical loss ($L_{max}$) is represented by the following equation:

$$L_{max} = -10 \log (\gamma\beta^{N-4}\alpha) + (N-1)L_f + N \cdot L_e$$

where $L_f$ (db) designates a loss of optical power in the channel between respective adjacent optical couplers 40 and $L_e$ (DB) designates a loss due to insertion of optical couplers 40. Meanwhile, the minimum optical loss ($L_{min}$) is given as a loss due to a channel between the branch ports in the same group or between the adjacent groups as follows:

$$L_{min} = M_{min} [L_e - 10 \log \delta, 2L_e, + L_f - 10 \log (\alpha\gamma)]$$

There is also the following restrictive conditions among the above elements $\alpha$, $\beta$, $\gamma$, and $\delta$ for each of optical couplers 40 because respective optical couplers 40 are composed of passive devices which carry out branching or insertion of optical signals.

$$\beta + M \cdot \alpha \leqq 1$$

$$2\gamma + (M - 1) \delta \leqq 1$$

Moreover, assuming that all of optical fibers comprising main optical signal transmission lines 38 have the identical core diameter and the identical number of openings in the incoherent optical system, the following equations are obtained on the basis of the Liouville principle:

$$\beta + M \cdot \gamma \leqq 1$$

$$2\alpha + (M - 1) \delta \leqq 1$$

Thus, it will be understood from those conditions that the foregoing parameters $\alpha$, $\beta$, $\gamma$ and $\delta$ should be optimized and determined to meet the following equations in order to minimize the maximum optical loss ($L_{max}$):

$$\beta_{opt} = (N - 2)/N$$

$$\alpha_{opt} = \gamma_{opt} = 2/(M \times N)$$

The optimized maximum optical loss ($L_{max, opt}$) may therefore be given as follows:

$$L_{max,opt} = -10 \log \{\frac{(1-\beta_{opt})^2}{M^2} \cdot \beta N-2\} + (N-1)L_f + N \cdot L_e$$

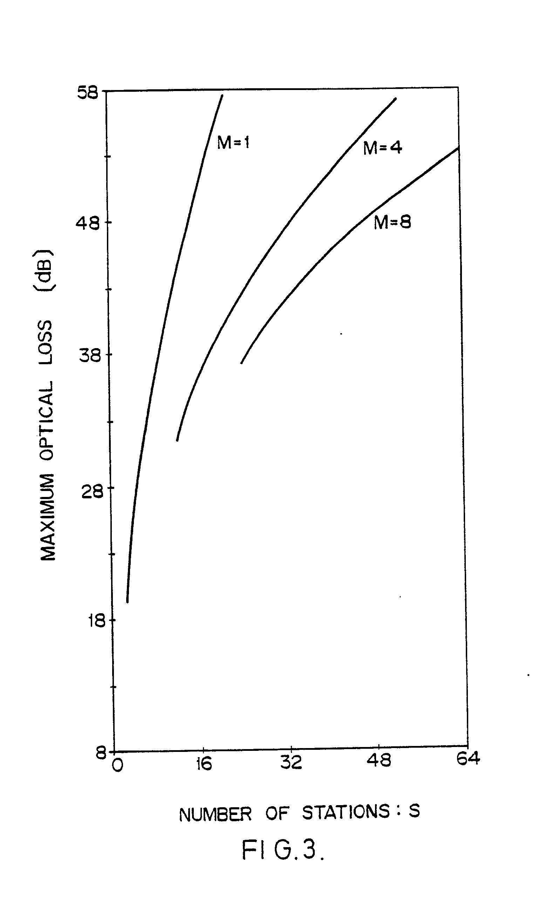

The preceding equation designates the relation between the total number of stations S and the maximum optical loss ($L_{max, opt}$). The relation is shown in Fig. 3 with the number N of stations included in each group being as a parameter, here $L_c = 1$ dB

As M = 1 means that each passive optical coupler 40 has only one branch, a characteristic given by a parameter of M = 1 in Fig. 3 corresponds to that of a' prior system using tee couplers (eg as disclosed in US 3883217). As is clear from the characteristics shown in Fig. 3, the maximum optical loss ($L_{m'x, opt}$) is significantly improved compared with the prior system.

Generally, when transmitting optical information with a predetermined quality of transmission, the power of the received light must be maintained above a predetermined value and this in turn allows an optical loss just below a predetermined value. Therefore, it becomes possible to increase the number of stations S while maintaining such optical loss below the predetermined value. In other words, high quality transmission of optical information can be performed among a number of stations with less optical loss.

Generally speaking, assuming that the total number of stations S is the same, the system having more branch ports has the smaller optical loss. However, this results in the system totally having longer transmission lines. In this invention, M must be selected in consideration of these conditions.

A dynamic range required for optical receivers in such an optical transmission network will be described. The dynamic range needed for the optical receivers is given as a difference between the maximum optical loss ($L_{max}$) and the minimum optical loss ($L_{min}$) in the transmission network. A narrower dynamic range is more preferable for practical use, because manufacturing of the optical receivers is facilitated correspondingly. In this connection, the maximum optical loss ($L_{max}$) is given as ($L_{max, opt}$) on the optimized conditions of parameters for the optical couplers as stated above, whereas the minimum optical loss ($L_{min}$) is indefinite and varies depending on the parameter $\delta$ as is clear from the aforesaid formula of ($L_{min, opt}$). Now, when the parameter $\delta$ is given by

4

$$\delta_{max} = \frac{1 - \dfrac{4}{M \cdot N}}{M - 1}$$

and assuming its maximum value, the dynamic range D is represented when $N \geq 3$ as follows:

$$D = -10 \log (\gamma_{opt} \cdot \beta_{opt} \cdot \alpha_{opt}) + 10 \log \delta_{nax}$$
$$+ (N - 1)L_f + (N - 1)L_e$$

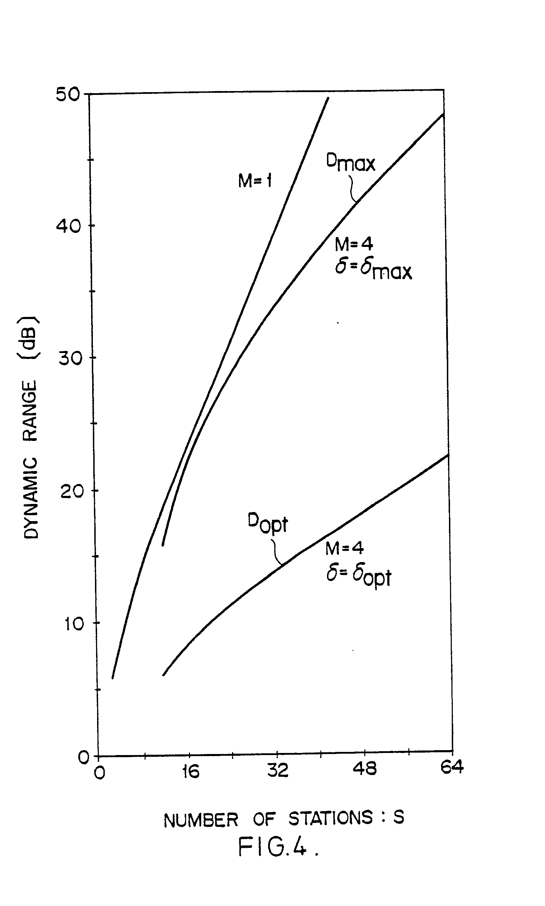

Fig. 4 shows the relation between the dynamic range D and the number S of stations with $\delta$ being a parameter in the case of $M = 4$.

Taking account here of the fact that $\delta$ is indefinite in a range given by the above equation, it becomes feasible to provide

$$\delta = \delta_{opt}$$

on the following condition

$$10 \log \frac{\gamma_{opt} \cdot \alpha_{opt}}{\delta_{opt}} = L_e + L_f$$

so as to make a loss which occurred through the channel in the same group equal with that which occurred through the channel between the adjacent groups. Then the dynamic range ($D_{opt}$) is given as follows:

$$D_{opt} = -10 \log (\beta_{opt}^{N-2}) + (N - 2)L_f + (N - 2)L_e$$

Therefore, the optimized dynamic range ($D_{opt}$) shows a characteristic curve as illustrated in Fig. 4 with respect to the number S of stations, and the dynamic range required for the optical receivers is significantly reduced. As a result, this makes it possible to raise the limit on specifications for the optical receivers and to realize the optical communication apparatus with ease.

In this respect, optimization of the value is carried out, for example, by adding a proper loss to the transmission channels for optical information. More concretely, optimization can be easily realized by interposing a light absorbing medium in the channels or by applying axial distortion to the optical fibers.

The optical transmission network with such an arrangement as mentioned above has highly advantageous effects in practical use for the following reasons:

(a) The maximum optical loss ($L_{max}$) is lowered and this makes it possible to increase the number S of stations of increase the distance between adjacent stations.

(b) The overall length of the optical transmission paths necessary for connecting the stations to one another is reduced.

(c) A level of reliability needed for the optical connectors for use in connecting the optical transmission paths and the optical couplers becomes less strict.

(d) Parameters for each optical coupler are so optimized that the dynamic range needed for the optical receivers can be narrowed.

The number of branch ports of each optical coupler may be decided in accordance with specifications. The number S of stations can be optionally determined so far as S is within the range of $N \times M$. In addition, the optical couplers comprising a passive device may have various structures. In short, it should be understood that many changes and modifications may be made in this invention without departing from the scope thereof.

Now, several embodiments of passive optical couplers in accordance with the present invention will be explained concretely. There are two types of these optical couplers. One is a transmission type in which an optical signal transmits through the optical couplers. Another is a reflection type in which an optical signal is reflected by reflectors in the optical couplers.

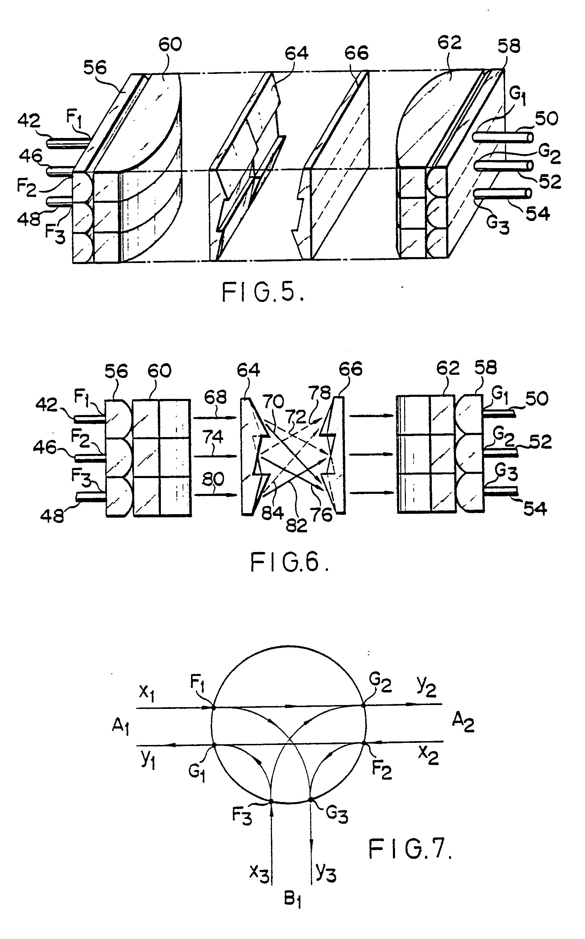

At first, embodiments of the transmission type will be explained. Figs. 5 and 6 show an optical coupler of this type, having three pairs of ports. Fig. 7 shows a schematic view of a passive optical coupler, having the characteristic by the present invention in the case of three pairs of ports. A first pair of ports comprised of input ports $F_1$ and output port $G_1$ form bus port $A_1$ which may be connected to one main optical signal transmission line. A second pair of ports comprised of input port $F_2$ and output port $G_2$ form bus port $A_2$ which may be connected to another main optical signal transmission line. A third pair of ports comprised of input port $F_3$ and output port $G_3$ form branch port $B_1$ which may be connected to a branch optical transmission line. An optical signal inputted to input port $F_1$ should be outputted to output port $G_2$ and output port $G_3$. An optical signal inputted to input port $F_2$ should be outputted to output port $G_3$ and $G_1$. An optical signal inputted to input port $F_3$ should be outputted to output ports $G_1$ and $G_2$.

The optical coupler shown in Figs. 5 and 6 has the above characteristics. Input ports $F_1$, $F_2$ and $F_3$ are associated with optical fibres 42, 46 and 48 and output ports $G_1$, $G_2$ and $G_3$ are associated with optical fibers 50, 52 and 54. Lens assemblies 56 and 58 each includes three stacked cylindrical lenses. Each of optical fibers 42, 46 and 48 is joined to one cylindrical lens of lens assembly 56, respectively. Each of optical fibers 50, 52 and 54 is joined to one cylindrical lens of lens assembly 58, respectively. Cylindrical lenses 60 and 62 and deflectors 64 and 66 are set as shown in Figs. 5 and 6 between assemblies 56 and 58. Each of cylindrical lenses 60 and 62 has three cylindrical areas corresponding to each cylindrical lens of lens assemblies 56 and 58. Deflectors 64 and 66 have substantially the same structure with three deflecting areas in a direction parallel to fibers 43, 46 and 48, and two deflecting areas in the other direction making a total of six deflecting areas.

Lens assembly 56 and cylindrical lens 60 make up an input lens system and cylindrical lens 62 and lens assembly 58 constitute an output lens system. The input and output lens systems have substantially the same structure. Optical signals (light) inputted to input ports $F_1$, $F_2$ and $F_3$ are changed into three parallel flat optical signals stacked by the input lens systems. These flat optical signals irradiate deflector 64 and then they are deflected by it. The flat optical signal designated by solid line arrow 68 is deflected as designated by solid line arrow 70 and dotted line arrow 72. The flat optical signal designated line 74 is deflected as designated by solid line arrow 76 and dotted line arrow 78. The flat optical signal designated line 80 is deflected as designated by solid line arrow 82 is deflected as designated by solid line arrow 82 and dotted line arrow 84.

As a result, the above-mentioned characteristic can be designated as shown in Fig. 7. An optical signal inputted to input port $F_1$ is outputted to output ports $G_2$, $G_3$. An optical signal inputted to input port $F_2$ is outputted to output ports $G_3$, $G_1$. An optical signal inputted to input port $F_3$ is outputted to output ports $G_1$, $G_2$. The above embodiments shown in Figs. 5 and 6 is an optical coupler having three pairs of ports. In similar conception, however, optical couplers having more pairs of ports can be realized by deflectors having more deflecting areas.

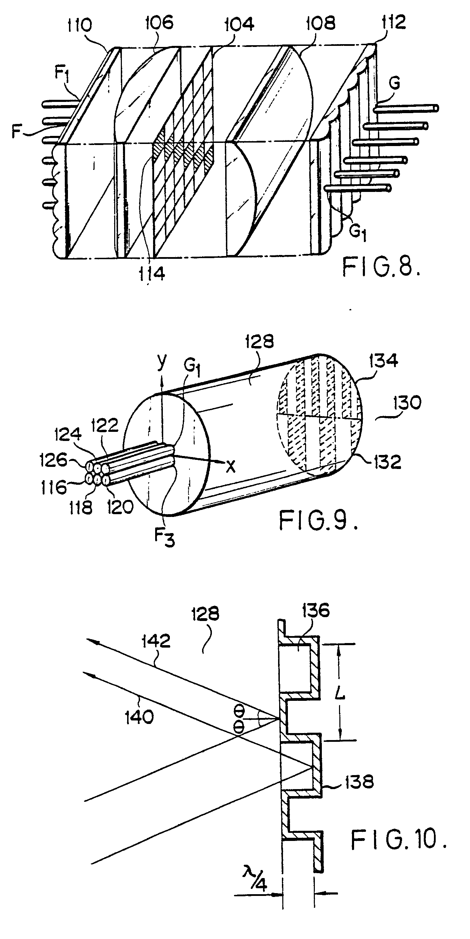

Fig. 8 shows another embodiment of the transmission type. In this embodiment of the present invention, interceptor 104 having diagonal intercepting areas is used. Two cylindrical lenses 106 and 108 are placed orthogonally with respect to each other on opposite sides of interceptor 104. Two lens assemblies 110 and 112 each of which is comprised of several stacked cylindrical lenses are placed on the outside of lenses 106 and 108. An optical fiber is connected to each of stacked cylindrical lenses of lens assemblies 110 and 112. The optical fibers connected to lens assembly 110 form input ports F and the optical fibers connected to lens assembly 112 form output ports G. For example, input port $F_1$ and output port $G_1$ constitute a first pair of ports. An optical signal inputted to input port $F_1$ is intercepted by intercepting area 114 of interceptor 104 and then is not outputted to output $G_1$. Therefore, the optical coupler shown in Fig. 8 has the transfer characteristics mentioned above.

Next, several embodiments of the reflection type will be explained. Fig. 9 shows an embodiment of this type. The optical coupler uses a diffraction grating and has three pairs of ports. Numerals 116, 118 and 120 are optical fibers acting as input ports $F_1$, $F_2$ and $F_3$, respectively. Numerals 122, 124 and 126 are optical fibers acting as output port $G_1$, $G_2$ and $G_3$, respectively. Numeral 128 is a rod lens having the characteristic that its refractive index in a radial direction is directly proportional to the square of the radius. The length of rod lens 128 is one fourth of the pitch of the light. Reflector 130, including two diffraction gratings 132 and 134, is formed on rod lens 128 and on the end face opposite to the end face joined to optical fibers 116 through 126.

Diffraction grating 132 has a grating structure of the period $L_1$ and diffraction grating 134 has a grating structure of the period $L_2$ (= $L_1/2$). Fig. 10 shows a sectional view of diffraction gratings 132 and 134. Reflector 130 is made uniformly forming thin film $SiO_2$ 136 on the end face of rod 128 in thickness of a quarter wavelength (g) of light. Then diffraction grating of period L($L_1$ or $L_2$) is formed by photolithography. Finally gold thin film 138 is evaporated. Zero order light diffracted by reflector 130 becomes zero, because light 140, reflected by gold thin film 138, has phase delay of $\lambda/2$ in comparison with light 142 reflected by the end face of rod lens 128.

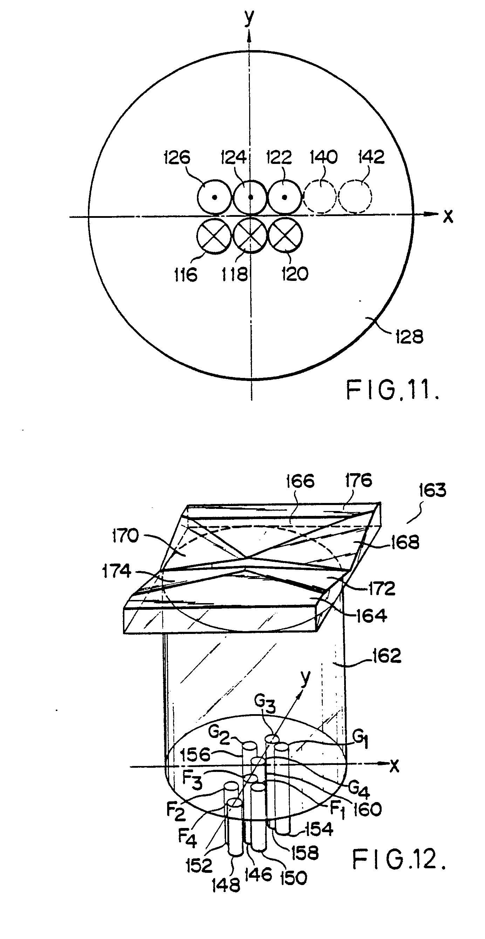

Fig. 11 shows the positional relation of optical fibers 116—126 to rod lens 128. Optical signals inputted to optical fibers 116, 118 and 120, incident on rod lens 128, are reflected by reflector 130. If reflector 130 is a simple mirror, an optical signal inputted to optical fiber 116 is reflected to optical fiber 122 placed at the position symmetrical to the position of optical fiber 116 about the zero point. However, reflector 130 is a diffraction grating, an optical signal inputted through optical fiber 116 does not reach fiber 122 because zero order light diffracted by reflector 130 is zero. First order light from fiber 116, diffracted by diffraction grating 132, is inputted to optical fiber 124 and dummy fiber 140, and first order light from fiber 116, diffracted by diffraction grating 134, is inputted to optical fiber 126 and dummy fiber 142. Thus, the spacing of fibers 116—126 determines the periods $L_1$ and $L_2$ of diffraction gratings 132 and 134. Optical signals inputted to dummy fibers 140 and 142 are absorbed.

As a result, an optical signal inputted through optical fiber 116 (i.e. input port $F_1$) is outputted to optical fibers 124 and 126 (i.e. output ports $G_2$ and $G_3$). Similarly, an optical signal inputted through optical fiber 118 (i.e. input port $F_2$) is outputted to optical fibers 122 and 126 (i.e. output ports $G_1$ and $G_3$), and an optical signal inputted through optical fiber 120 (i.e. input port $F_3$) is outputted to optical fibers 124 and 126 (i.e. output port $G_2$ and $G_3$). Thus, the optical coupler shown in Fig. 9 also has the characteristics shown in Fig. 7.

By similar conception, optical couplers having more than three pairs of ports can be realized.

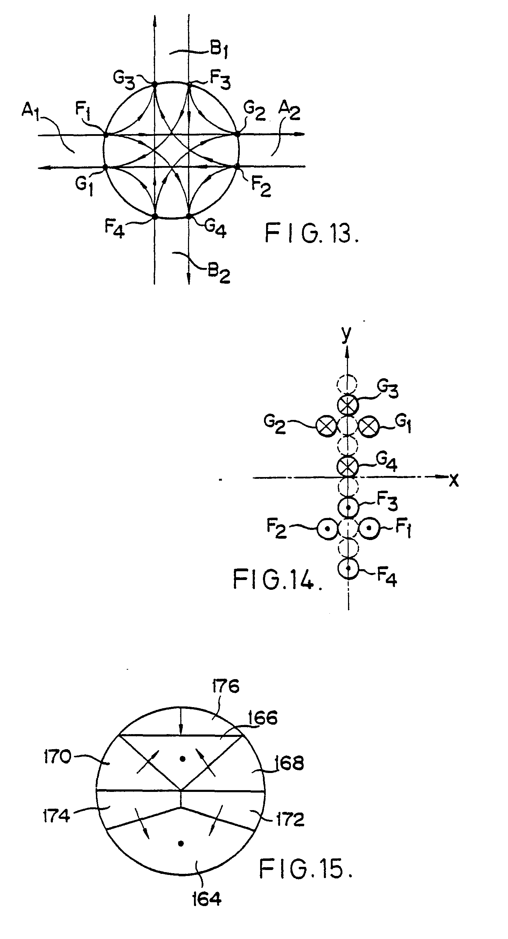

Next, another embodiment of the reflection type will be explained. Fig. 12 shows an optical coupler having four pairs of ports and a reflector comprised of several reflecting faces. Generally, the transfer characteristics necessary for optical couplers having four pairs of ports in accordance with the present invention can be designated as shown in Fig. 13. Namely, the optical coupler has two bus ports $A_1$ and $A_2$ and two branch ports $B_1$ and $B_2$. An optical signal inputted to input port $F_1$ of bus port $A_1$ is outputted three output ports $G_2$, $G_3$ and $G_4$ of bus port $A_2$ and branch ports $B_1$ and $B_2$. Similarly, an optical signal inputed to input port $F_2$ is outputted to three output ports $G_3$, $G_4$ and $G_1$. An optical signal inputted to input port $F_3$ is outputted to output ports $G_4$, $G_1$ and $G_2$ and an optical signal inputted to input port $F_4$ is outputted to output ports $G_1$, $G_2$ and $G_3$.

The optical coupler shown in Fig. 12 has the characteristics shown in Fig. 13. Numerals 146, 148, 150 and 152 are optical fibers acting as input ports $F_1$, $F_2$, $F_3$ and $F_4$. Numerals 154, 156, 158 and 160 are optical fibers acting as output ports $G_1$, $G_2$, $G_3$ and $G_4$. Fig. 14 shows the positional relation of these input ports and output ports. Circles drawn by dotted line indicate imaginary fibers. Of course, dummy fibers can be placed in these positions. These input ports and output ports are joined to rod lens 162 having a cylindrical shape. The length of rod lens 162 is one fourth of the pitch of light. Rod lens 162 is similar to rod lens 128 shown in Fig. 9.

Reflector 163, including several reflecting faces, is joined to rod lens 162 on the end face opposite to the end face joined to optical fibers 146—160. Reflector 163 is comprised of reflecting faces 164, 166, 168, 170, 172, 174 and 176. Fig. 15 shows the manner in which the reflecting faces of reflector 163 are tilted about rod lens 162. Arrows shown in Fig. 15 refer to the tilting direction of these reflecting faces. Dotted reflecting faces (i.e. 164 and 166) designated faces perpendicular to the axis of rod lens 162.

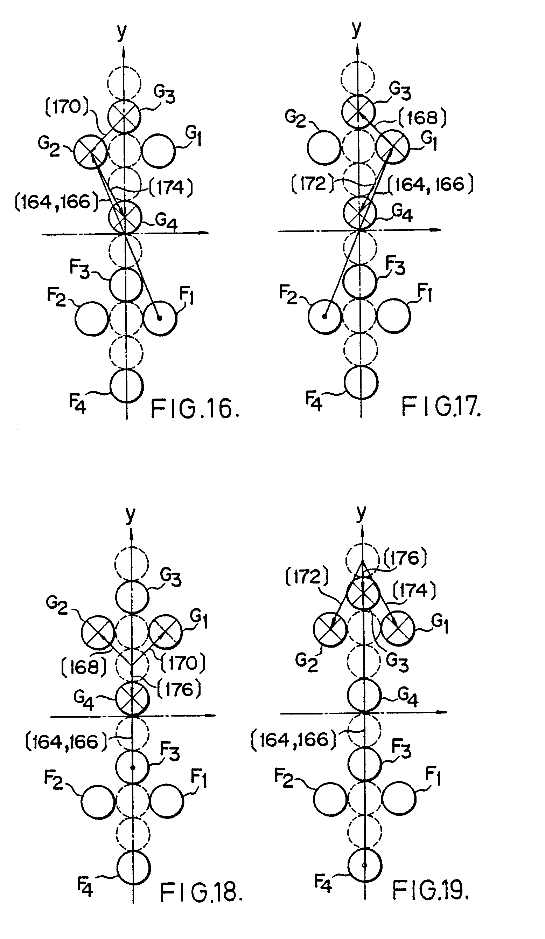

Fig. 16 shows the manner in which an optical signal inputted to input port $F_1$ is reflected. Generally, an optical signal inputted at a predetermined point is reflected to the position symmetrical to the predetermined point about the zero point by reflecting faces 164 and 166. Therefore, an optical signal inputted to input port $F_1$ passes through rod lens 162 and is then reflected by reflecting faces 164 and 166 and is outputted to output port $G_2$. An arrow from $F_1$ to $G_2$ shown in Fig. 16 designates this occurrence. However, a part of the optical signal is reflected by reflecting face 170 and is outputted to output port $G_3$. Another part of the optical signal is reflected by reflecting face 174 and is outputted to output port $G_4$. As a result, an optical signal inputted to input port $F_1$ is outputted to all output ports except output port $G_1$.

Fig. 17 shows the manner in which an optical signal inputted to input port $F_2$ is reflected. An optical signal inputted to input port $F_2$ is reflected by reflecting faces 164 and 166 and is then outputted to output port $G_1$. A part of the optical signal is reflected by reflecting face 168 and is outputted to output port $G_3$. Another part of the optical signal is reflected by reflecting face 172 and is outputted to output port $G_4$.

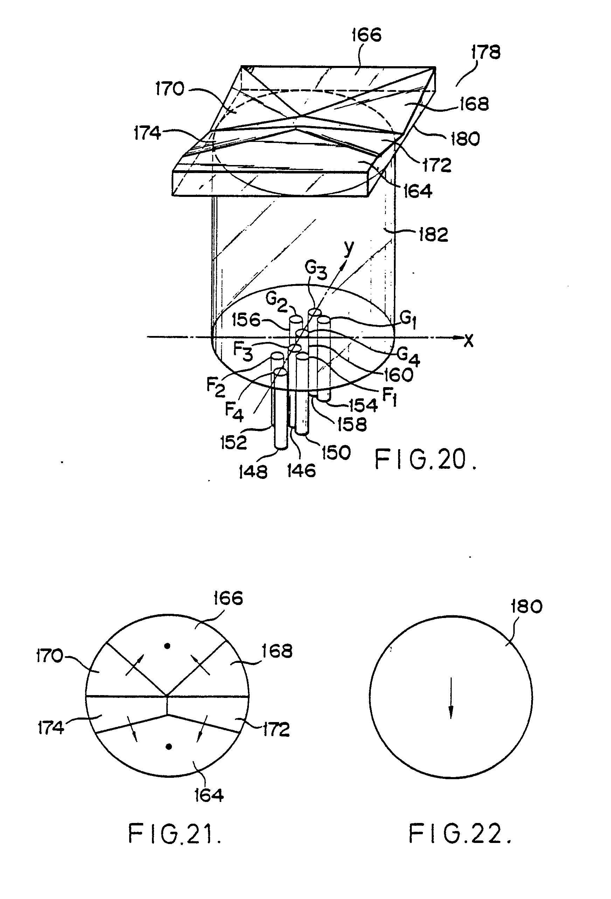

Fig. 18 shows the manner in which an optical signal inputted to input port $F_3$ is reflected. An optical signal inputted to input port $F_3$ is reflected by reflecting faces 164 and 166 and is then outputted to an imaginary fiber. However, a part of the optical signal is reflected by reflecting face 176 and is outputted to output port $G_4$. Another part of the optical signal is reflected by reflecting face 170 and is outputted to output port $G_1$. The other part of the optical signal is reflected by reflecting face 168 and is outputted to output port $G_2$. As a result, an optical signal inputted to input port $F_3$ is outputted to all output ports except output port $G_3$.

Fig. 19 shows the manner in which an optical signal inputted to input port $F_4$ is reflected. An optical signal inputted to input port $F_4$ is reflected by reflecting faces 164 and 166 and is then outputted to an imaginary fiber. However, a part of the optical signal is reflected by reflecting face 174 is outputted to output port $G_1$. Another part of the optical signal is reflected by reflecting face 172 and is then outputted to output port $G_2$. The other part of the optical signal is reflected by reflecting face 176 and is outputted to output port $G_3$. As a result, the optical coupler shown in Fig. 12 has the characteristic shown in Fig. 13. It is easy to manufacture the optical coupler shown in Fig. 12 because one face of reflector 163 is a simple plane, perpendicular to the axis of rod lens 162.

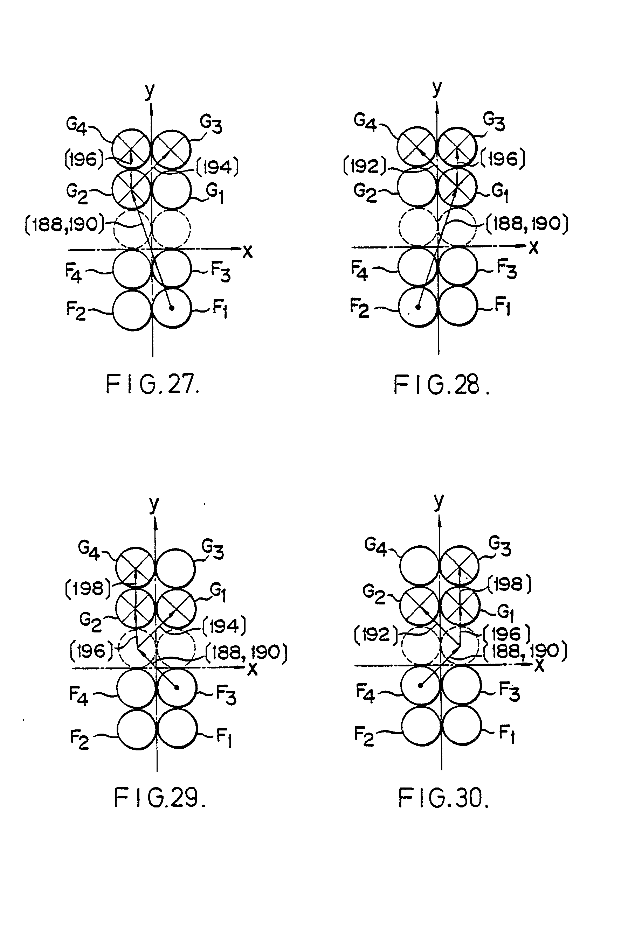

However, it is possible to use a reflector having a reflecting face on the face joined to the rod lens. Fig. 20 shows this kind of the embodiment of the present invention. Reflector 178 has reflecting face 180 corresponding to reflecting face 176 shown in Fig. 12 on the face joined to rod lens 182. Namely, reflector 178 has reflecting faces 164, 166, 168, 170, 172 and 174 on one face away from rod lens 182 and has reflecting face 180 adjacent rod lens 182 as shown in Figs. 21 and 22. Arrows shown in Figs. 27 and 28 designate the manner in which these reflecting faces tilt incident light. In this case, reflecting face 180 must have the characteristic that a part of the incident optical signal is reflect (e.g. 1%) and another part of the optical signal passes through it. An optical signal is reflected in the -y direction by reflecting face 180 instead of reflecting face 176. Therefore, a part of the optical signal inputted to input port $F_3$ is reflected by reflecting faces 164, 166 and 180 and outputted to output port $G_4$. A part of the optical signal inputted to input port $F_4$ is reflected by reflecting faces 164, 166 and 180 and outputted to output port $G_3$.

It is easy to manufacture the optical coupler shown in Fig. 20 because the number of reflecting faces on one face of reflector 178 is smaller than that of reflector 163. The optical coupler in Fig. 20 has advantage of eliminating unnecessary optical coupling, too.

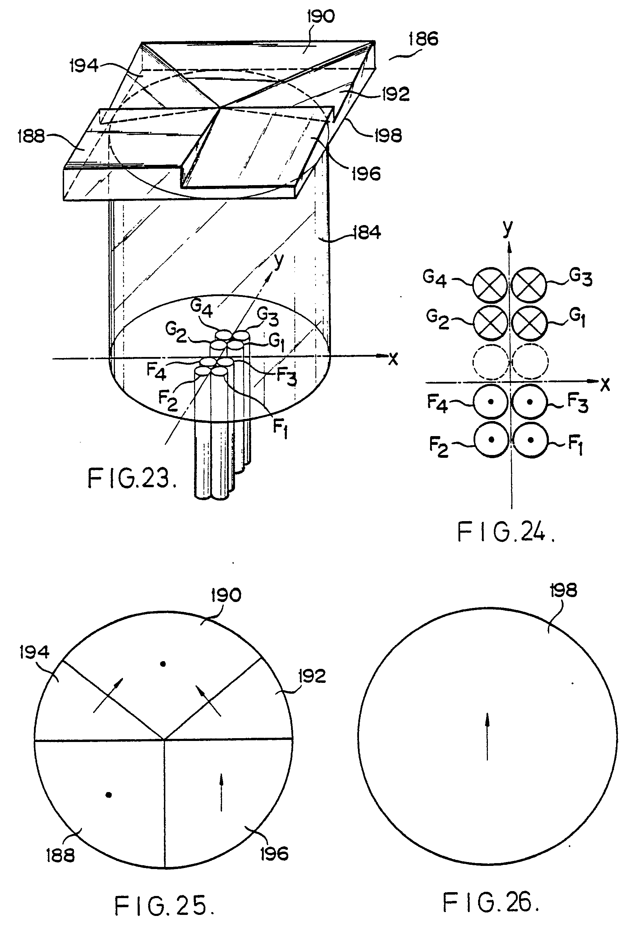

Fig. 23 shows another embodiment of a reflection type optical coupler having four pairs of ports. Eight optical fibers form input ports $F_1$, $F_2$, $F_3$, $F_4$ and output ports $G_1$, $G_2$, $G_3$, $G_4$. These optical fibers are joined to one end face of rod lens 184. Rod lens 184 is similar to rod lens 162 shown in Fig. 12. Reflector 186 is joined to rod lens 184 on the opposite end face of lens 162 and has six reflecting faces 188, 190, 192, 194, 196 and 198.

Fig. 24 shows the potential relationship of input ports $F_1$, $F_2$, $F_3$, $F_4$ and output ports $G_1$, $G_2$, $G_3$, $G_4$. Fig. 25 shows the manner in which reflecting faces 188, 190, 192, 194 and 196 tilt light, and Fig. 26 shows the manner in which reflecting face 198 tilts light.

Fig. 27 shows the manner in which an optical signal inputted to input port $F_1$ of the optical coupler shown in Fig. 23 is reflected. The optical signal is reflected by reflecting faces 188 and 190 and is outputted to output port $G_2$. A part of the optical signal is reflected also by reflecting face 194 and is outputted to output port $G_3$. Another part of the optical signal is reflected by reflecting face 196 and is outputted to output port $G_4$.

Fig. 28 shows the manner in which an optical signal inputted to port $F_2$ is reflected. The optical signal is reflected by reflecting faces 188 and 190 and is outputted to output port $G_1$. A part of the optical signal is reflected by reflecting face 196 and is outputted to output port $G_3$. Another part of the optical signal is reflected by reflecting face 192 and is outputted to output port $G_4$.

Fig. 29 shows the manner in which an optical signal inputted to input port $F_3$ is reflected. The optical signal is reflected by reflecting faces 188 and 190 to a dummy port. A part of the optical signal is reflected by reflecting face 194 and is outputted to output port $G_1$. Another part of the optical signal is reflected by reflecting face 196 and is outputted to output port $G_2$. Further, a part of the optical signal is reflected by reflecting face 198 and is outputted to output port $G_4$. Thus, an optical signal inputted to input port $F_3$ is outputted to all output ports except output port $G_3$.

Fig. 30 shows the manner in which an optical signal inputted to input port $F_4$ is reflected. The optical signal is reflected by reflecting faces 189 and 190 to a dummy port. A part of the optical signal is reflected by reflecting face 192 and is outputted to output port $G_2$. Another part of the optical signal is reflected by reflecting face 196 and is outputted to outport port $G_1$. Further, a part of the optical signal is reflected by reflecting face 198 and is outputted to output port $G_3$. Thus, an optical signal inputted to input port $F_4$ is not outputted to output port $G_4$. As a result, the optical coupler shown in Fig. 23 also has the characteristics shown in Fig. 23. Reflector 186 is advantageous in that it has smaller reflecting faces than reflector 178 or refletor 163.

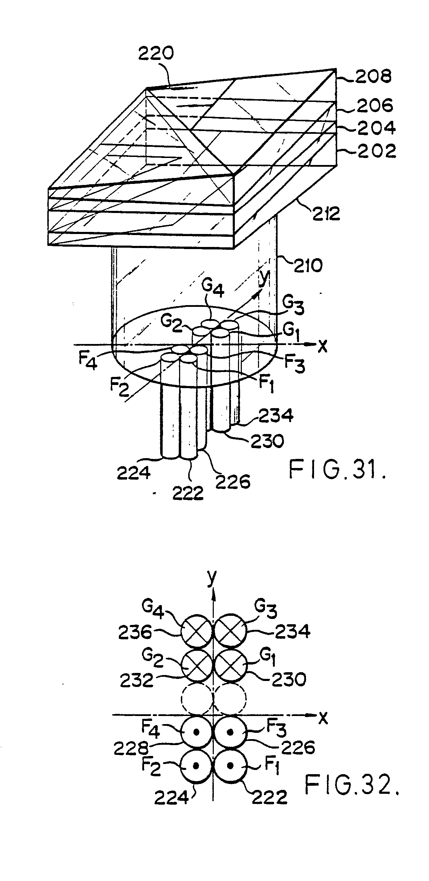

Fig. 31 shows another embodiment of the reflection type. The optical coupler has four reflecting plates 202, 204, 206 and 208. These reflecting plates are stacked on one and face of rod lens 210 similar to rod lens 162.

Eight optical fibers, forming input ports $F_1$, $F_2$, $F_3$ and $F_4$ and output ports $G_1$, $G_2$, $G_3$ and $G_4$, are joined to the other end face of rod lens 210. Fig. 32 shows the positional relationship of these input ports and output ports (e.g. optical fibres 222—236). The two circles drawn by dotted line indicate imaginary fibers.

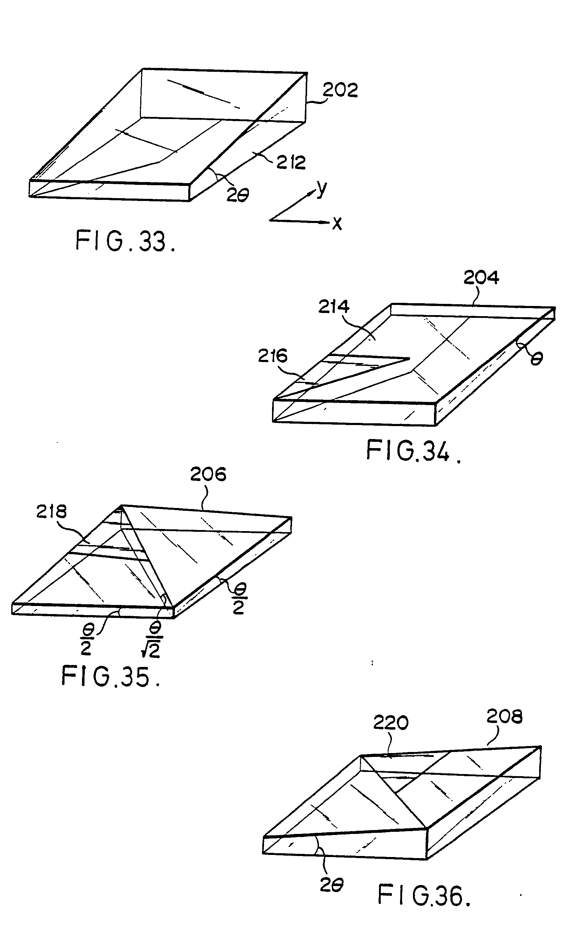

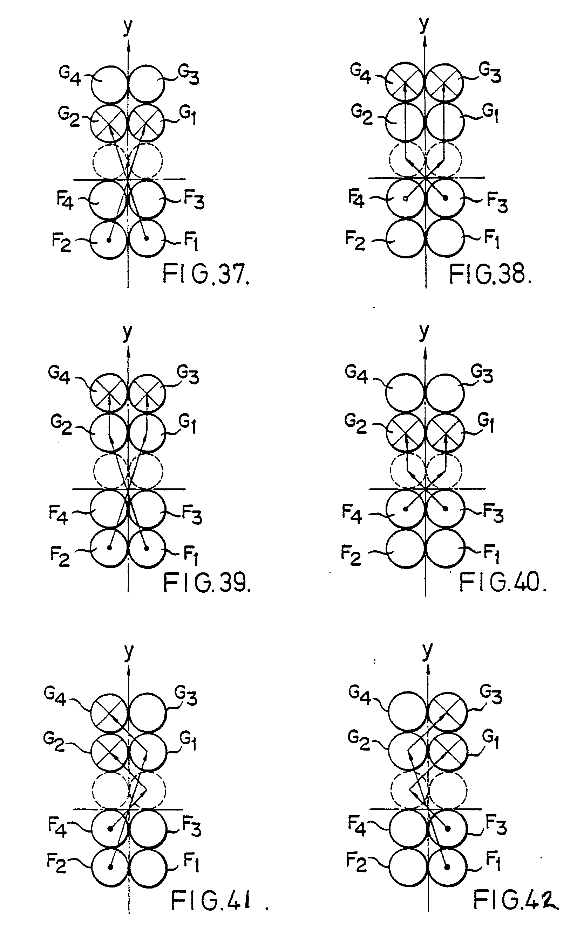

Fig. 33 shows reflecting plate 202 directly joined to rod lens 210. The upside face and the downside face of plate 202 form an angle of $2\theta$ in the y direction. Reflecting face 212 of the downside face is reflective. Here $\theta$ means the angle by which an optical singal is displaced with the length of adjacent optical fibers. Reflecting face 212 is perpendicular to the axis of rod lens 210. Therefore, an optical signal inputted to input port $F_1$ is reflected by reflecting face 212 and is outputted to output port $G_3$ as shown in Fig. 37. Similarly, an optical signal inputted to input port $F_2$ is reflected by reflecting face 212 and is outputted to output port $G_1$.

Reflecting plate 204, placed on reflecting plate 202, has an upside face and a downside face which form an angle of $\theta$ in the -y direction. The plate has two reflecting faces 214 and 216 as shown in Fig. 34 on opposite sides. Reflecting face 214 is formed by a film having a small reflection coefficient, for example 1%, as compared to the other reflecting faces.

The downside face of reflecting plate 204 is at an angle of $2\theta$ with respect to the end face of rod lens 210. Therefore, an optical signal inputted to input port $F_3$ is reflected by reflecting faces 212 and 214 and is outputted to output port $G_4$ as shown in Fig. 38. An optical signal inputted to input port $F_4$ is reflected by these reflecting faces and is outputted to output port $G_3$.

The upside face of reflecting plate 204 is at an angle of $2\theta - \theta = \theta$ with respect to the end face of rod lens 210. Therefore, an optical signal inputted to input port $F_1$ is reflected by reflecting faces 212 and 216 and is outputted to output port $G_4$ as shown in Fig. 39. An optical signal inputted to input port $F_2$ is reflected by these reflecting faces and is outputted to output port $G_3$.

On the other hand, an optical signal inputted to input port $F_3$ is reflected by reflecting faces 212, 216 and is outputted to output port $G_2$ as shown in Fig. 40. An optical signal inputted to input port $F_4$ is reflected by these reflecting faces and is outputted to output port $G_1$.

Reflecting plate 206, stacked on reflecting plate 204, has an upside face and downside face which form an angle of $\theta/2$ in both the -x direction and in the y direction, and an angle of $0/\sqrt{2}$ in the diagonal direction as shown in Fig. 35. The plate has reflecting face 218 on the upside face. As shown in Fig. 41, an optical signal inputted to input port $F_2$ is reflected by reflecting faces 212 and 218 and is outputted to output port $G_4$. An optical signal inputted to input port $F_4$ is also reflected by these reflecting faces and is outputted to output port $G_2$.

Reflecting plate 208 stacked on reflecting plate 206 has an upside face and a downside face which form an angle of $2\theta$ in the direction as shown in Fig. 36. The plate has reflecting face 220 on the upside face. As shown in Fig. 42, an optical signal inputted to input port $F_1$ is reflected by reflecting faces 212 and 220 and is

8

EP 0 080 829 B1

outputted to output port $G_3$. An optical signal inputted to input port $F_3$ is also reflected by these reflecting faces and is outputted to output port $G_1$.

The reflecting surfaces cooperate, for example, so that an optical signal inputted to input port $F_3$ is reflected and outputted to output ports $G_4$, $G_2$ and $G_1$ as shown in Figs. 38, 40 and 42. As a result, the optical coupler shown in Fig. 31 also has the characteristic shown in Fig. 13.

The optical coupler shown in Fig. 31 has large flexibility because the reflector is comprised of several reflecting plates having reflecting faces.

Rod lenses 128, 162, 182, 184 and 210 are used in these embodiments. However, optical transmitting means equivalent to these rod lenses can be used.

Obviously, many modifications and variations of the present invention are possible in the light of the above teachings. It is therefore to be undestood that within the scope of the appended claims, this invention may be practiced otherwise than as specifically described.

### Claims

1. A passive optical coupler comprising: at least three pairs of ports (F, $F_1$, $F_2$, $F_3$, G, $G_1$, $G_2$, $G_3$), each of said pairs including an input port (F, $F_1$, $F_2$, $F_3$) and a corresponding output port (G, $G_1$, $G_2$, $G_3$); said coupler further comprising an optical system (56, 58, 60, 62, 64, 66, 104, 106, 108, 110, 112), characterised in that the optical system comprises diverging and converging lens means for diverging an optical signal input beam from any said input port and converging an optical signal output beam onto any said output port and directing means for directing a said diverged optical signal input beam onto all said output ports except said output port (G, $G_1$, $G_2$, $G_3$) corresponding to said input port (F, $F_1$, $F_2$, $F_3$) receiving said optical signal input beam.

2. A passive optical coupler as claimed in claim 1, characterized in that said diverging and converging means comprises an input lens system (56, 60) which diverges optical signal beams inputted to each of said input port ($F_1$, $F_2$, $F_3$) to form respective planar optical beams and an output lens system (58, 62) which converges said planar beams from said directing means onto said output ports (G, $G_1$, $G_2$, $G_3$).

3. A passive optical coupler as claimed in claim 2 wherein the directing means comprises first and second spaced transmissive deflectors.

4. A passive optical coupler as claimed in claim 3, characterized in that said input lens system (56, 60) is of substantially the same optical type as said output lens system (58, 62) and mutually opposing surfaces of said deflectors (64, 66) are of complementary shape.

5. A passive optical coupler as claimed in claim 2, characterized in that said directing means comprising intercepting means (104), placed between said input lens system (106, 110) and said output lens system (108, 112), for interrupting said planar optical signal beams from said input lens system so that an optical signal beam inputted to any one of said input ports (106, 110) does not reach the corresponding one of said output ports (108, 112).

6. A passive optical coupler according to claim 1 wherein the directing means comprises reflecting means (130, 163, 178, 186, 212, 214, 216, 218, 220) facing said pairs of ports ($F_1$, $F_2$, $F_3$, $F_4$) for reflecting an optical signal beam inputted to any one of said input ports ($F_1$, $F_2$, $F_3$, $F_4$) to all of said output ports ($G_1$, $G_2$, $G_3$, $G_4$) except said output port corresponding to said input port ($F_1$, $F_2$, $F_3$, $F_4$) receiving the input optical signal beam and said diverging and converging means comprises optically transmissive means (128, 162, 182, 184, 210) placed between said pairs of ports ($F_1$, $F_2$, $F_3$, $F_4$, $G_1$, $G_2$, $G_3$, $G_4$) and said reflecting means (130, 163, 178, 186, 212, 214, 216, 218, 220), for transmitting an optical signal beam inputted to one of said input ports ($F_1$, $F_2$, $F_3$, $F_4$) to said reflecting means (130, 163, 178, 186, 212, 214, 216, 218, 220) and transmiting an optical signal beam from said reflecting means (130, 163, 178, 186, 212, 214, 216, 218, 220) to said output ports ($G_1$, $G_2$, $G_3$, $G_4$).

7. A passive optical coupler in accordance with claim 6, characterized in that said diverging and converging means (128, 162, 182, 184, 210) is a rod lens.

8. A passive optical coupler in accordance with claim 6 or claim 7, characterized in that said reflecting means (130) includes a plurality of diffraction gratings (132, 134).

9. A passive optical coupler in accordance with claims 6 or 7, characterized in that said reflecting means (163, 178, 186) includes a polyhedron having a plurality of reflecting faces (164, 166, 168, 170, 172, 174, 176, 180, 188, 190, 192, 194, 196, 198).

10. A passive optical coupler in accordance with claim 9, characterized in that all said reflecting faces (164, 166, 168, 170, 172, 174, 176, 180, 188, 190, 192, 194, 196, 198) of said reflecting means (163, 178, 192, 194, 196, 198) are formed as facets on a face of said polyhedron opposite to a face of said polyhedron joined to said optical transmitting means (162, 182, 184).

11. A passive optical coupler in accordance with claim 9, characterized in that at least one of said reflecting faces (164, 166, 168, 170, 172, 174, 176, 180, 188, 190, 192, 194, 196, 198) is formed on a face of said polyhedron joined to said optical transmitting means (162, 182, 184).

12. A passive optical coupler in accordance with claim 6 or claim 7, characterized in that said reflecting means (212, 214, 216, 218, 220) is comprised of a plurality of reflecting plates (202, 204, 206, 208) having reflecting faces (212, 214, 216, 218, 220).

13. An optical communication system comprising: a plurality of stations (34), each of said stations (34)

9

# EP 0 080 829 B1

including means (32) for generating and processing optical signal beams, at least two passive optical couplers (40) as claimed in any one of the preceding claims, and a plurality of optical signal transmission lines (36, 38) interconnecting said passive optical couplers (40) and connecting said stations (34) to said optical couplers (46).

## Patentansprüche

1. Passiver Optokoppler mit wenigstens drei Paaren von Ports (F, $F_1$, $F_2$, $F_3$, G, $G_1$, $G_2$, $G_3$), wobei jedes Paar einen Eingangsport (F, $F_1$, $F_2$, $F_3$) und einen entsprechenden Ausgangsport (G, $G_1$, $G_2$, $G_3$) aufweist, und wobei der Koppler ferner ein optisches System (56, 58, 60, 62, 64, 66, 104, 106, 108, 110, 112) aufweist, dadurch gekennzeichnet, daß das optische System aufweist: eine Streu- und Sammellinseneinrichtung zum Streuen eines optischen Signaleingangsstrahles von jedem beliebigen Eingangsport und zum Sammeln eines optischen Signalausgangsstrahles an jedem beliebigen Ausgangsport, und eine Richteinrichtung zum Richten eines gestreuten optischen Signaleingangsstrahls auf alle Ausgangsports, mit Ausnahme desjenigen Ausgangsports (G, $G_1$, $G_2$, $G_3$), de demjenigen Eingangsport (F, $F_1$, $F_2$, $F_3$) entspricht, der den optischen Signaleingangsstrahl empfängt.

2. Passiver Optokoppler nach Anspruch 1, dadurch gekennzeichnet, daß die Streu- und Sammeleinrichtung ein Eingangslinsensystem (56, 60) aufweist, das optische Signaleingangsstrahlen, die in jeden de Eingangsports ($F_1$, $F_2$, $F_3$) eingegeben sind, derart streut, daß jeweils planare optische Strahlen gebildet werden, und daß die Streu- und Sammeleinrichtung ein Ausgangslinsensystem (58, 62) aufweist, das die planaren Strahlen von der Richteinrichtung an den Ausgangsports (G, $G_1$, $G_2$, $G_3$) sammelt.

3. Passiver Optokoppler nach Anspruch 2, bei dem die Richteinrichtung erste und zweite voneinander beabstandete durchlässige Deflektoren aufweist.

4. Passiver Optokoppler nach Anspruch 3, dadurch gekennzeichnet, daß das Eingangslinsensystem (56, 60) im wesentlichen vom gleichen optischen Typ ist wie das Ausgangslinsystem (58, 62) und daß einander gegenüberliegende Flächen der Deflektoren (64, 66) von komplementärer Form sind.

5. Passiver Optokoppler nach Anspruch 2, dadurch gekennzeichnet, daß die Richteinrichtung eine zwischen dem Eingagslinsensystem (106, 110) und dem Ausgangslinsensystem (108, 112) angeordnete Unterbrechereinrichtung (104) zum Unterbrechen der planaren optischen Signalstrahlen vom Eingangslinsensystem aufweist, so daß ein in jeden beliebigen Eingangsport (106, 110) eingegebener optischer Signalstrahl den entsprechenden Ausgangsport (108, 112) nicht erreicht.

6. Passiver Optokoppler nach Anspruch 1, bei dem die Richteinrichtung eine den Paaren von Ports ($F_1$, $F_2$, $F_3$, $F_4$) zugewandte Reflektier-Einrichtung (130, 163, 178, 186, 212, 214, 216, 218, 220) zum Reflektieren eines einem beliebigen Eingangsport ($F_1$, $F_2$, $F_3$, $F_4$) eingegebenen optischen Signalstrahles zu sämtlichen Ausgangsports ($G_1$, $G_2$, $G_3$, $G_4$), mit Ausnahme desjenigen Ausgangsports aufweist, der demjenigen Eingangsport ($F_1$, $F_2$, $F_3$, $F_4$) entspricht, der den optischen Signaleingangsstrahl empfängt, und bei dem die Streu- und Sammeleinrichtung zwischen den Paaren von Ports ($F_1$, $F_2$, $F_3$, $F_4$, $G_1$, $G_2$, $G_3$, $G_4$) und der Reflektier-Einrichtung (130, 163, 178, 186, 212, 214, 216, 218, 220) angeordnete optisch durchlässige Einrichtungen (128, 162, 182, 184, 210) zum Transmittieren eines in einen der Eingangsports ($F_1$, $F_2$, $F_3$, $F_4$) eingegebenen optischen Signalstrahls an die Reflektier-Einrichtung (130, 163, 178, 186, 212, 214, 216, 218, 22;) und zum Transmittieren eines optischen Signalstrahles von der Reflektier-Einrichtung (130, 163, 178, 186, 212, 214, 216, 218, 220) zu den Ausgangsports ($G_1$, $G_2$, $G_3$, $G_4$) aufweist.

7. Passiver Optokoppler nach Anspruch 6, dadurch gekennzeichnet, daß die Streu- und Sammeleinrichtung (128, 162, 182, 184, 210) eine Stablinse ist.

8. Passiver Optokoppler nach Anspruch 7, dadurch gekennzeichnet, daß die Reflektier-Einrichtung (130) mehrere Beugungsgitter (132, 134) aufweist.

9. Passiver Optokoppler nach Anspruch 6 oder 7, dadurch gekennzeichnet, daß die Reflektier-Einrichtung (163, 178, 186) ein Polyeder mit mehreren reflektierenden Flächen (164, 166, 168, 170, 172, 174, 176, 180, 188, 190, 192, 194, 196, 198) aufweist.

10. Passiver Optokoppler nach Anspruch 9, dadurch gekennzeichnet, daß sämtliche reflektierenden Flächen (164, 166, 168, 170, 172, 174, 176, 180, 188, 190, 192, 194, 196, 198) der Reflektier-Einrichtung (130, 163, 178, 186, 212, 214, 216, 218, 220) als Facetten auf einer Fläche des Polyeders ausgebildet sind, die einer mit der optischen Transmissionseinrichtung (162, 182, 184) verbundenen Fläche des Polyeders gegenüberliegt.

11. Passiver Optokoppler nach Anspruch 9, dadurch gekennzeichnet, daß wenigstens eine reflektierende Fläche (164, 166, 168, 170, 172, 174, 176, 180, 188, 190, 192, 194, 196, 198) auf einer Fläche des Polyeders ausgebildet ist, die mit der optischen Transmissionseinrichtung (162, 182, 184) verbunden ist.

12. Passiver Optokoppler nach Anspruch 6 oder 7, dadurch gekennzeichnet, daß die Reflektier-Einrichtung (212, 214, 216, 218, 220) aus mehreren reflektierenden Platten (202, 204, 206, 208) mit reflektierenden Flächen (212, 214, 216, 218, 220) besteht.

13. Optisches Kommunikationssystem mit mehreren Stationen (34), wobei jede der Stationen (34) Einrichtungen (32) zum Erzeugen und Verarbeiten optischer Signalstrahlen aufweist, wenigstens zwei passiven Optokopplern (40) nach einem der vorhergehenden Ansprüche und mehreren Übertragungsleitungen (36, 38) für optische Signale, welche die passiven Optokoppler (40) miteinander und die Stationen (34) mit den Optokopplern (40) verbinden.

10

# EP 0 080 829 B1

**Revendications**

1. Coupleur optique passif comprenant: au moins trois paires de ports (F, $F_1$, $F_2$, $F_3$, G, $G_1$, $G_2$, $G_3$), chacune desdites paires comportant un port d'entrée (F, $F_1$, $F_2$, $F_3$) et un port de sortie correspondant (G, $G_1$, $G_2$, $G_3$); ledit coupleur comprenant en outre un système optique (56, 58, 60, 62, 64, 66, 104, 106, 108, 110, 112), caractérisé en ce que le système optique comprend un moyen dy type lentilles de divergence et de convergence servant à faire diverger un faisceau d'entrée constituant un signal optique qui vient d'un quelconque desdits ports d'entrée et faire converger un faisceau de sortie constituant un signal optique sur l'un quelconque desdits ports de sortie, et un moyen de direction servant à diriger un dit faisceau d'entrée ayant divergé, constituant un signal optique, sur tous lesdits ports de sortie, à l'exception dudit port de sortie (G, $G_1$, $G_2$, $G_3$) correspondant audit port d'entrée (F, $F_1$, $F_2$, $F_3$) qui a reçu ledit faisceau d'entrée constituant un signal optique.

2. Coupleur optique passif selon la revendication 1, caractérisé en ce que ledit moyen de divergence et de convergence comprend un système de lentilles d'entrée (56, 60) qui fait diverger les faisceaux constituant des signaux optiques qui sont appliqués à chacun desdits ports d'entrée ($F_1$, $R_2$, $F_3$) afin de former des faisceaux optiques plans respectifs, et un système de lentilles de sortie (58, 62) qui fait converger lesdits faisceaux plans venant dudit moyen de direction sur lesdits ports de sortie (G, $G_1$, $G_2$, $G_3$).

3. Coupleur optique passif selon la revendication 2, où le moyen de direction comprend des premier et deuxième déflecteurs de transmission séparés.

4. Coupleur optique passif selon la revendication 3, caractérisé en ce que ledit système de lentilles d'entrée (56, 60) est sensiblement du même type optique que ledit système de lentilles de sortie (58, 62) et en ce que les surfaces muteuellement en regard des déflecteurs (64, 66) ont des formes complémentaires.

5. Coupleur optique passif selon la revendication 2, caractérisé en ce que ledit moyen de direction comprend un moyen d'interception (104) placé entre ledit système de lentilles d'entrée (106, 110) et ledit système de lentille de sortie (108, 112) servant à interrompre lesdits faisceaux plans constituant des signaux optiques qui viennent dudit système de lentilles d'entrée de façon qu'un faisceau constituant un signal optique qui a été appliqué à l'un quelconque desdits ports d'entrée (106, 110) n'atteigne pas celui desdits ports de sortie (108, 112) qui lui correspond.

6. Coupleur optique passif selon la revendication 1, où ledit moyen de direction comprend un moyen réfléchissant (130, 163, 178, 186, 212, 214, 216, 218, 220) situé en regard dedites paires de ports ($F_1$, $F_2$, $F_3$, $F_4$) afin de réfléchir un faisceau constituant un signal optique qui est appliqué à l'un quelconque desdits ports d'entrée ($F_1$, $F_2$, $F_3$, $F_4$) ver tous lesdits ports de sortie ($G_1$, $G_2$, $G_3$, $G_4$), à l'exception dudit port de sortie qui correspond audit port d'entrée ($F_1$, $F_2$, $F_3$, $F_4$) qui a reçu ledit faisceau d'entrée constituant un signal optique, et ledit moyen de divergence et de convergence comprend des moyens de transmission optique (128, 162, 182, 184, 210) placés entre lesdites paires de ports ($F_1$, $F_2$, $F_3$, $F_4$, $G_1$, $G_2$, $G_3$, $G_4$) et ledit moyen réfléchissant (130, 163, 178, 186, 212, 214, 216, 218, 220) afin de transmettre un faisceau constituant un signal optique qui a été appliqué à l'un desdits ports d'entrée ($F_1$, $F_2$, $F_3$, $F_4$) audit moyen réfléchissant (130, 163, 178, 186, 212, 214, 216, 218, 220) et de transmettre un faisceau constituant un signal optique qui vient dudit moyen réfléchissant (130, 163, 178, 186, 212, 214, 216, 218, 220) auxdits ports de sortie ($G_1$, $G_2$, $G_3$, $G_4$).

7. Coupleur optique passif selon la revendication 6, caractérisé en ce que ledit moyen de divergence et de convergence (128, 162, 182, 184, 210) est une lentille en forme de cylindre.

8. Coupleur optique passif selon la revendication 6 ou 7, caractérisé en ce que ledit moyen de réfléchissant (130) comporte plusieurs réseaux de diffraction (132, 134).

9. Coupleur optique passif selon la revendication 6 ou 7, caractérisé en ce que ledit moyen de réfléchissant (163, 178, 186) comporte un polyèdre qui possède plusieurs faces réfléchissantes (164, 166, 168, 170, 172, 174, 176, 180, 188, 190, 192, 194, 196, 198).

10. Coupleur optique passif selon la revendication 9, caractérisé en ce que toutes lesdites faces réfléchissantes (164, 166, 168, 170, 172, 174, 176, 180, 188, 190, 192, 194, 196, 198) dudit moyen réfléchissant (163, 178, 192, 194, 196, 198) sont formées de facettes disposées sur une face dudit polyèdre en regard d'une face dudit polyèdre réunie audit moyen de transmission optique (152, 182, 184).

11. Coupleur optique passif selon la revendication 9, caractérisé en ce qu'au moins une desdites faces réfléchissantes (164, 166, 168, 170, 172, 174, 176, 180, 188, 190, 192, 194, 196, 198) est formée sur une face dudit polyèdre réunie audit moyen de transmission optique (162, 182, 184).

12. Coupleur optique passif selon la revendication 6 ou 7, caractérisé en ce que ledit moyen réfléchissant (212, 214, 216, 218, 220) est constitué de plusieurs plaques réfléchissantes (202, 204, 206, 208) possédant des faces réfléchissantes (212, 214, 216, 218, 220).

13. Système de communication optique comprenant: plusieurs stations (34), chacune desdites stations (34) comportant des moyens (32) servant à produire et traiter des faisceaux constituant des signaux optiques, au moins deux coupleurs optiques passifs (40) tels que revendiqués dans l'une quelconque des revendications précédentes, et plusieurs lignes de transmission de signaux optiques (36, 38) interconnectant lesdits coupleurs optiques passifs (40) et connectant lesdites stations (34) auxdits coupleurs optiques (46).

11

FIG.1.

FIG.2.

EP 0 080 829 B1

FIG.3.

NUMBER OF STATIONS : S

FIG.4.

FIG.5.

FIG.6.

FIG.7.

FIG.8.

FIG.9.

FIG.10.

FIG.11.

FIG.12.

FIG. 13.

FIG.14.

FIG.15.

FIG.16.

FIG.17.

FIG.18.

FIG.19.

F I G. 20.

F I G. 21.

F I G. 22.

FIG.23.

FIG.24.

FIG.25.

FIG.26.

F I G. 27.

F I G. 28.

F I G. 29.

F I G. 30.

FIG.31.

FIG.32.

FIG.33.

202

212

2θ

y

x

FIG.34.

204

214

216

θ

FIG.35.

206

218

$\frac{\theta}{2}$

$\frac{\theta}{2}$

$\frac{\theta}{\sqrt{2}}$

FIG.36.

220

208

2θ

FIG.37.

FIG.38.

FIG.39.

FIG.40.

FIG.41.

FIG.42